# EUROPEAN PATENT SPECIFICATION

(11) **EP 4 013 629 B1**
(45) Date of publication and mention of the grant of the patent: **21.02.2024**
(21) Application number: 20744134.6
(22) Date of filing: 22.07.2020
(51) Int. Cl.: B60C 19/00, B29D 30/38, B29D 30/06, B60C 19/12

(54) **A PROCESS FOR MANUFACTURING A NOISE REDUCING LAYER AND A TYRE COMPRISING SAID NOISE REDUCING LAYER**
VERFAHREN ZUR HERSTELLUNG EINER GERÄUSCHMINDERNDEN LAGE UND REIFEN MIT DIESER GERÄUSCHMINDERNDEN LAGE
PROCÉDÉ DE FABRICATION D'UNE COUCHE DE RÉDUCTION DE BRUIT ET PNEU COMPRENANT LADITE COUCHE DE RÉDUCTION DE BRUIT

(30) Priority: 12.08.2019 IT 201900014673; 26.11.2019 IT 201900022119
(43) Date of publication of application: 22.06.2022
(73) Proprietor: Bridgestone Europe NV/SA, 1930 Zaventem (BE)
(72) Inventor: ARENDS, Robin, 00128 Roma (IT); PONTONE, Roberto, 00128 Roma (IT); CAPALDI, Cristian, 00128 Roma (IT); FORTUNATO, Gaetano, 00128 Roma (IT); CAMOSI, Luca, 00128 Roma (IT)
(74) Representative: Marchetti, Alessio
(86) International application number: PCT/IB2020/056902
(87) International publication number: WO 2021/028747

(56) References cited:
- WO-A1-2019/129584
- DE-U1-202010 005 400
- GB-A- 2 483 255
- US-A- 3 425 890
- US-A1- 2006 157 180

## Description

The invention relates to a process for manufacturing a noise reducing layer. Furthermore, the invention relates to a tyre comprising the noise reducing layer housed in the inner cavity of the tyre.

One of the noises produced by a tyre in use is the resonance noise of the cavity generated by the vibration of air under pressure inside the inner cavity of the tyre.

In particular, the rolling of the tyre on a surface with a macro-roughness excites the air inside the tyre. The column of air trapped in the tyre has its own natural modes.

Its first natural mode, called cavity mode, ranges between 180 and 250 Hz for a typical passenger car tyre, depending on the size of the envelope. When the column of air starts resonating, it creates acoustic pressure on the wheel, which causes it to vibrate. The wheel then transmits its vibrations to hub of the wheel, then to the passenger compartment through structure-borne propagation. The cavity noise perceived inside the car usually resembles the one of a panpipe and it is known as cavity resonance noise. To reduce this type of noise, the use of a porous material applied to the surface of the impermeable layer of the inner cavity of the cavity, so that the cavity resonance noise is reduced by the porous material, has long been known. The porous material works by reducing the section available to the propagating pressure waves and contributes by dissipating the pressure waves.

In case the sealing action and the noise reducing action need to be combined in one single tyre, its inner cavity has to simultaneously house both the sealant layer and the noise reducing layer. Obviously, taking into account the mechanism with which the sealant layer operates, experimented solutions have adopted a sealant layer arranged in contact with an air impermeable layer and a foam material layer arranged, in turn, in contact with the sealant layer on the opposite side relative to the air impermeable layer.

Herein and below, for "air impermeable layer" we mean a layer substantially impermeable to air, and used in tubeless tyres in order to make sure that the air inside the carcass remains as much as possible under pressure.

These solutions turned out to be ineffective because, as prior art documents (e.g. WO2017/076531) pointed out, the foam material physically interacts with the sealant layer and forbid the flowability of the sealant.

DE202010005400 discloses a tire comprising a tire cavity enclosed by a running strip supporting the tread surface and a noise dampening insert or a noise dampening insert arrangement disposed in the cavity.

US3425890 discloses the production of plastic foam materials in which the foam is distorted and heat set in the distorted state wherein the distortion arises from stretching and/or compressing the foam.

WO2019129584 discloses a pneumatic tyre comprising an inner surface of the tyre, wherein a sound absorbing device component is connected to the inner surface of the tyre and comprises a panel with a plurality of perforations and two sidewall sections.

US2006157180 discloses a low noise pneumatic tire where a band-shaped sound absorbing material formed of a porous material whose apparent density defined in JIS K6400 is in a range of 10 to 70 kg/m3, is attached on the inner surface of a tread by use of an elastic fixing band.

GB2483255 discloses a tyre cavity noise absorber comprising a sound absorbing body and a support wherein the absorber is arranged such that, when installed in a tyre cavity and the tyre is stationary, the support supports the sound absorbing body in a position spaced from the inside circumferential wall of the tyre.

Therefore, there is a strong need to rely on a solution that allows manufacturers to use, in the inner cavity of a tyre, both the sealant layer and the noise reducing element, leaving, at the same time, the respective sealing and noise reducing properties unchanged.

The inventors of this invention offer an effective noise reducing layer that can be used alone or together with a sealant layer, without suffering from the above-mentioned drawback of the prior art.

The subject-matter of the invention is a process for manufacturing a noise reducing layer designed to be housed inside the cavity of a tyre; said process being characterized in that it comprises:
- a stacking step, during which a stack of fibre-reinforced rubber or pre-preg layers is created, in which between one layer and the other there is interposed a plurality of anti-sticking elements spaced apart from one another; said anti-sticking elements being arranged in a staggered position along the two faces of a same fibre-reinforced rubber or pre-preg layer;
- a vulcanization step, during which said stack (1) of fibre-reinforced rubber or pre-preg layers is subjected to a compacting pressure and to a fibre-reinforced rubber or pre-preg vulcanization temperature;
the anti-sticking elements being in a liquid state.

Hereinafter by "anti-sticking element" we mean a material that, when placed between two rubber layers, prevents said rubber layers, during the vulcanization step, from being subjected to chemical bonds, thus being glued to one another.

The use of the anti-sticking element in the liquid state is preferred as it ensures a quicker and more effective removal thereof at the end of the manufacturing of the fibre-reinforced rubber or pre-preg structure.

The anti-sticking elements are arranged between the rubber layers and are preferably spaced apart from one another by a same distance and are staggered by half said distance along two opposite faces of a same fibre-reinforced rubber or pre-preg layer.

By so doing, a honeycomb fibre-reinforced rubber or pre-preg structure can be obtained.

Said compacting pressure preferably ranges from 1.5 to 2.5 MPa.

Preferably, the fibre-reinforced rubber or pre-preg structure comprises a fibre fabric consisting of a plurality of cords parallel to one another; more preferably, the fibre-reinforced rubber comprises a fibre fabric with a net structure; even more the fibre-reinforced rubber or pre-preg comprises a fibre fabric with a net structure in which the cords intersect one another at a right angle.

The fibre fabric with a plurality of cords parallel to one another or, even better, with a net structure in which the cords intersect one another at a right angle is preferred as, during the manufacturing of the fibre-reinforced rubber or pre-preg structure, it ensures a better structural resistance when it undergoes a great compression during the vulcanization step.

Preferably, said fibre is Nylon.

Preferably, the fibre-reinforced rubber or pre-preg structure has a honeycomb structure.

A further subject-matter of the invention is a pneumatic tyre comprising a tread, a carcass defining an inner cavity and a noise reducing layer, which is arranged in said inner cavity in the area of the tread; said tyre being characterized in that the noise reducing layer comprises a fibre-reinforced rubber or pre-preg structure with through cells; said through cells of having a cross area ranging from 100 to 20000 mm²; said fibre-reinforced rubber or pre-preg structure having a height ranging from 15 to 40 mm.

More preferably, said through cells have a cross area ranging from 500 to 9000 mm²; even more preferably said cells have a cross area ranging from 1000 to 5000 mm².

Preferably, the fibre-reinforced rubber or pre-preg structure has a height ranging from 20 to 35 mm.

Preferably, the fibre-reinforced rubber or pre-preg structure comprises a fibre fabric consisting of a plurality of cords parallel to one another; more preferably, the fibre-reinforced rubber or pre-preg comprises a fibre fabric with a net structure; even more preferably, the fibre-reinforced rubber or pre-preg comprises a fibre fabric with a net structure in which the cords intersect one another at a right angle.

Preferably, the fibre is Nylon.

Preferably, the fibre-reinforced rubber or pre-preg structure has a honeycomb structure.

Preferably, said noise-reducing layer comprises foam material layer placed to cover a surface of said grid facing the inner cavity. Preferably, said foam material is made of polyurethane.

Preferably, said noise-reducing layer comprises a membrane or plate placed to cover a surface of said grid facing the inner cavity. More preferably, said membrane or plate is perforated. Even more preferably, said perforated membrane or plate is made of expanded polypropylene.

Preferably, the pneumatic tyre comprises a sealant layer placed between an air impermeable layer and said noise reducing layer.

Hereinafter you can find the description of embodiments of the invention, by mere way of example, with the aid of the accompanying figures, wherein:
- figure 1 shows a semi-finished product of the fibre-reinforced rubber structure according to the invention; and
- figure 2 shows the fibre-reinforced rubber structure according to the invention.
- figure 3 shows a first embodiment of the invention;
- figure 4 shows the embodiment of figure 3 with the presence of a sealant layer;
- figure 5 shows a second embodiment of the invention;
- figure 6 shows a third embodiment of the invention;
- figure 7 shows a fourth embodiment of the invention;

The example below uses a fibre-reinforced rubber structure consisting of a 6.6 Nylon fabric with a net structure in which the cords intersect one another at a right angle and of a rubber layer which incorporates said fabric and whose composition in phr is shown in Table I.

**Table I**

| | |
|---|---|
| NR | 60 |
| SBR | 40 |
| CB | 48 |
| Sulphur | 1.4 |
| Accelerator | 1.3 |

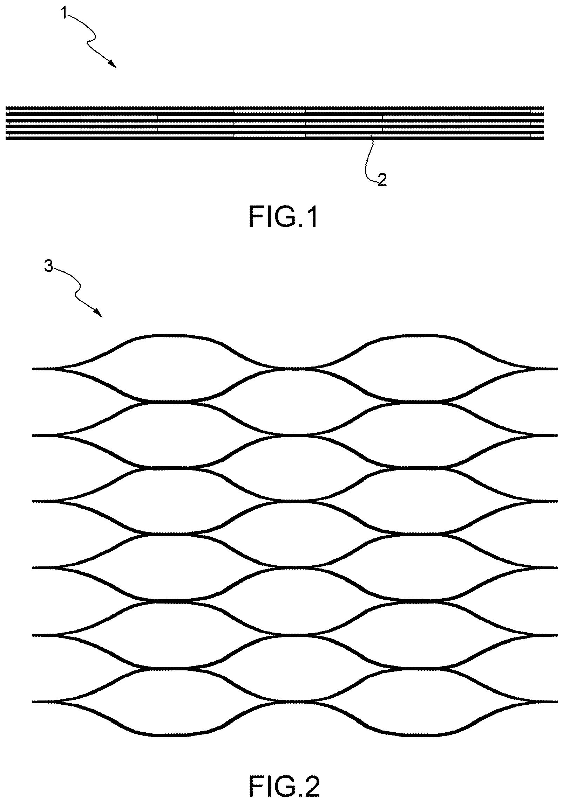

Six layers made of the above-mentioned fibre-reinforced rubber and with a thickness of 1.5 mm were stacked on top of one another so as to form a stack according to figure 1, where it is indicated with number 1.

A plurality of anti-sticking elements 2 were interposed between one layer and the other, so as to avoid, during the vulcanization, the creation of a chemical bond between two adjacent layers and, hence, a gluing thereof. In particular, the anti-sticking elements used is a silicon spray which is marketed with the trade name "RESINA P8".

The stack 1 was inserted into a suitable mould, where it was subjected to a pressure of 2 MPa and to a temperature of 145°C for an amount of time of 30 min.

After the vulcanization step, the stack 1 was opened by pulling the two end layers in opposite directions, thus obtaining the fibre-reinforced rubber structure 3 according to the invention.

The fibre-reinforced rubber structure 3 is a honeycomb structure with cells with a hexagonal shape, each having a cross area of 900 mm² and a height of 30 mm.

As can be evident to a skilled man of the art, the above method can be effectively repeated using a pre-preg material.

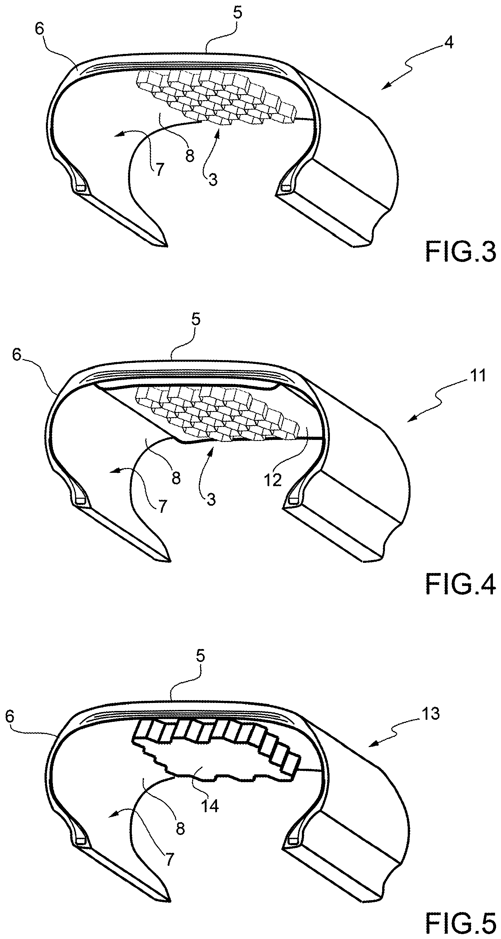

In figure 3, number 4 indicates, as a whole, a tyre according to the invention. The tyre 4 comprises a tread 5, a carcass 6 defining an inner cavity 7 of the tyre 4, an inner-liner 8 facing the inner cavity 7 and designed to make sure that the air contained in the inner cavity 7 remains under pressure, and the fibre-reinforced rubber structure 3 arranged inside the cavity 7 in order to attenuate the resonance cavity noise generated by the operating tyre.

The fibre-reinforced rubber structure 3 comprises a honeycomb structure defining a plurality of through cells.

In the other figures (3 - 7) the parts of the respective tyres identical to those of the tyre 4 will be indicated with the same numerical reference and will not be described again.

Figure 4 shows a tyre 11 that differs from that of figure 3 only by the presence of a sealant layer 12.

Figure 5 shows a tyre 13 that differs from that of figure 3 only by the presence of a membrane 14 placed to cover a surface of said grid facing the inner cavity 7.

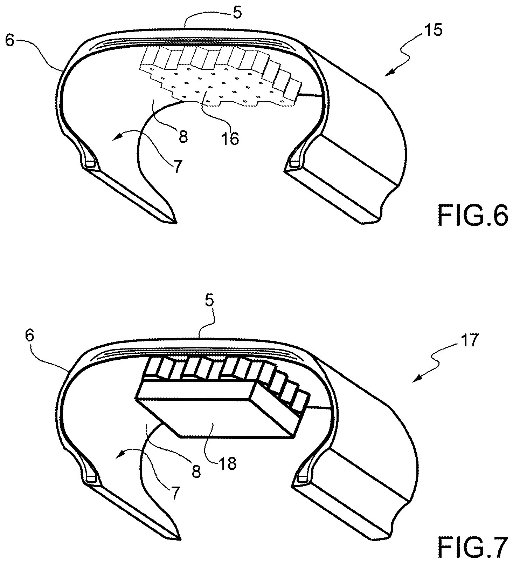

Figure 6 shows a tyre 15 that differs from that of figure 3 only by the presence of a perforated membrane 16 placed to cover a surface of said grid facing the inner cavity 7.

The materials and the thickness of membrane 14 and the perforated membrane 16 can be decided according to purposes. For example, it can be made of expanded polypropylene-and are 3 mm-thick.

Figure 7 shows a tyre 17 that differs from that of figure 3 only by the presence of a foam material layer 18 made of polyurethane and placed to cover a surface of said grid facing the inner cavity 7.

When a grid structure of the invention is laid down in the tyre cavity, it can work as the noise reducer. Additionally, when put the grid structure on the sealant layer surface, it covers only a minimal fraction of the sealant area, typically less than 5%. That means that the sealant is free from impediments in the remaining 95% of the area. When a puncture occurs in the area where the grid structure of the invention is present, sealing performances are still guaranteed by the repairing sealant flow coming from the surrounding cells free surface areas.

## Claims

1. A process for manufacturing a noise reducing layer designed to be housed inside the cavity of a tyre; said process being **characterized in that** it comprises:
- a stacking step, during which a stack (1) of fibre-reinforced rubber or pre-preg layers is created, in which between one layer and the other there is interposed a plurality of anti-sticking elements (2) spaced apart from one another; said anti-sticking elements being arranged in a staggered position along the two faces of a same fibre-reinforced rubber or pre-preg layer;
- a vulcanization step, during which said stack (1) of fibre-reinforced rubber or pre-preg layers is subjected to a compacting pressure and to a fibre-reinforced rubber vulcanization temperature;
said anti-sticking elements (2) being in a liquid state.

2. A process according to one of the claims 1, **characterized in that** the anti-sticking elements arranged between the fibre-reinforced rubber or pre-preg layers are spaced apart from one another by a same distance and are staggered by half said distance along two opposite faces of a same fibre-reinforced rubber or pre-preg layer.

3. A process according to claim 1 or 2, **characterized in that** said fibre-reinforced rubber or pre-preg structure comprises a fibre fabric consisting of a plurality of cords parallel to one another.

4. A process according to claim 3, **characterized in that** the fibre-reinforced rubber or pre-preg comprises a fibre fabric with a net structure.

5. A process according to claim 4, **characterized in that** said fibre-reinforced rubber or pre-preg comprises a fibre fabric with a net structure in which the cords intersect one another at a right angle.

6. A process according to one of the preceding claims, **characterized in that** said fibre is Nylon.

7. A process according to one of the preceding claims, **characterized in that** said fibre-reinforced rubber or pre-preg structure (3) has a honeycomb structure.

8. A pneumatic tyre (4) comprising a tread (5), a carcass (6) defining an inner cavity (7) and a noise reducing layer, which is arranged in said inner cavity in the area of the tread; said tyre being **characterized in that** the noise reducing layer comprises a fibre-reinforced rubber or pre-preg structure (3) with through cells; said through cells having a cross area ranging from 100 to 20000 mm²; said fibre-reinforced rubber or pre-preg structure (3) having a height ranging from 15 to 40 mm and a width ranging from 45 to 85% relative to the width of the tread.

9. A pneumatic tyre according to claim 8, **characterized in that** said through cells have a cross area ranging from 500 and 9000.

10. A pneumatic tyre according to claim 9, **characterized in that** said through cells have a cross area ranging from 1000 to 5000 mm².

11. A pneumatic tyre according to one of the claim from 8 to 10, **characterized in that** said fibre-reinforced rubber or pre-preg structure (3) has an height from 20 to 35 mm and a width comprised between 55 and 80% of a tread width.

12. A pneumatic tyre according to one of the claim from 8 to 11, **characterized in that** said fibre-reinforced rubber or pre-preg structure (3) has a polygonal structure.

13. A pneumatic tyre according to one of the claims 8 to 12, **characterized in that** said fibre-reinforced rubber or pre-preg structure (3) has a honeycomb structure.

14. A pneumatic tyre according to one of the claims 8 to 13, **characterized in that** said fibre-reinforced rubber or pre-preg structure comprises a fibre fabric consisting of a plurality of cords parallel to one another.

15. A pneumatic tyre according to claim 14, **characterized in that** said fibre-reinforced rubber or pre-preg comprises a fibre fabric with a net structure in which the cords intersect one another at a right angle.

16. A pneumatic tyre according to one of the claims 8 to 15, **characterized in that** said fibre is Nylon.

17. A pneumatic tyre according to one of the claims 8 to 16, **characterized by** comprising a foam material layer (18) placed to cover a surface of said fibre-reinforced rubber or pre-preg structure (3) facing the inner cavity (7) .

18. A pneumatic tyre according to claim 17,
**characterized in that** said foam material layer (18) is made of polyurethane.

19. A pneumatic tyre according to one of the claims 8 to 16, **characterized by** comprising a membrane or plate placed (14; 16) to cover a surface of said fibre-reinforced rubber or pre-preg structure (3) facing the inner cavity (7).

20. A pneumatic tyre according to claim 19, **characterized in that** said membrane or plate (16) is perforated.

21. A pneumatic tyre according to claim 19 or 20, **characterized in that** membrane or plate (14; 16) is made of expanded PET, PE, PP, PU, PA.

22. A pneumatic tyre according to one of the claims 8 to 21, **characterized by** comprising a sealant layer (12) placed between said inner-liner (8) and fibre-reinforced rubber or pre-preg structure (3).

## Patentansprüche

1. Prozess zum Herstellen einer Geräuschreduzierungsschicht, die ausgelegt ist, um innerhalb des Hohlraums eines Reifens untergebracht zu werden; wobei der Prozess **dadurch gekennzeichnet ist, dass** er umfasst:
- einen Stapelschritt, während dem ein Stapel (1) von faserverstärkten Kautschuk- oder Pre-Preg-Schichten geschaffen wird, bei dem zwischen einer Schicht und der anderen eine Vielzahl von voneinander beabstandeten Antihaftelementen (2) dazwischen eingerichtet ist; wobei die Antihaftelemente in einer gestaffelten Position entlang der zwei Flächen einer gleichen faserverstärkten Kautschuk- oder Pre-Preg-Schicht angeordnet sind;
- einen Vulkanisationsschritt, während dem der Stapel (1) von faserverstärkten Kautschuk- oder Pre-Preg-Schichten einem Verdichtungsdruck und einer faserverstärkten Kautschukvulkanisierungstemperatur ausgesetzt wird;
wobei die Antihaftelemente (2) in einem flüssigen Zustand sind.

2. Verfahren nach einem der Ansprüche 1, **dadurch gekennzeichnet, dass** die Antihaftelemente, die zwischen den faserverstärkten Kautschuk- oder Pre-Preg-Schichten angeordnet sind, um einen gleichen Abstand voneinander beabstandet sind und um den halben Abstand entlang zwei entgegengesetzter Flächen einer gleichen faserverstärkten Kautschuk- oder Pre-Preg-Schicht gestaffelt sind.

3. Verfahren nach Anspruch 1 oder 2, **dadurch gekennzeichnet, dass** die faserverstärkte Kautschuk- oder Pre-Preg-Struktur ein Fasergewebe umfasst, das aus einer Vielzahl von Schnüren besteht, die parallel zueinander sind.

4. Verfahren nach Anspruch 3, **dadurch gekennzeichnet, dass** der faserverstärkte Kautschuk oder Pre-Preg ein Fasergewebe mit einer Netzstruktur umfasst.

5. Verfahren nach Anspruch 4, **dadurch gekennzeichnet, dass** der faserverstärkte Kautschuk oder Pre-Preg ein Fasergewebe mit einer Netzstruktur umfasst, in der sich die Schnüre in einem rechten Winkel schneiden.

6. Verfahren nach einem der vorstehenden Ansprüche,
**dadurch gekennzeichnet, dass** die Faser Nylon ist.

7. Verfahren nach einem der vorstehenden Ansprüche,
**dadurch gekennzeichnet, dass** die faserverstärkte Kautschuk- oder Pre-Preg-Struktur (3) eine Wabenstruktur aufweist.

8. Luftreifen (4), der eine Lauffläche (5), eine Karkasse (6), die einen inneren Hohlraum (7) definiert, und eine Geräuschreduzierungsschicht umfasst, die in dem inneren Hohlraum in der Region der Lauffläche angeordnet ist; wobei der Reifen **dadurch gekennzeichnet ist, dass** die Geräuschreduzierungsschicht eine faserverstärkten Kautschuk- oder Pre-Preg-Struktur (3) mit Durchgangszellen umfasst; wobei die Durchgangszellen eine Querschnittsregion in einem Bereich von 100 bis 20.000 mm2 aufweisen; wobei die faserverstärkte Kautschuk- oder Pre-Preg-Struktur (3) eine Höhe in einem Bereich von 15 bis 40 mm und eine Breite in einem Bereich von 45 bis 85 % relativ zu der Breite der Lauffläche aufweist.

9. Luftreifen nach Anspruch 8, **dadurch gekennzeichnet, dass** die Durchgangszellen eine Querschnittsregion in einem Bereich von 500 und 9000 aufweisen.

10. Luftreifen nach Anspruch 9, **dadurch gekennzeichnet, dass** die Durchgangszellen eine Querschnittsregion in einem Bereich von 1000 bis 5000 mm2 aufweisen.

11. Luftreifen nach einem des Anspruchs 8 bis 10,
**dadurch gekennzeichnet, dass** die faserverstärkte Kautschuk- oder Pre-Preg-Struktur (3) eine Höhe von 20 bis 35 mm und eine Breite aufweist, die zwischen 55 und 80 % einer Laufflächenbreite umfasst.

12. Luftreifen nach einem des Anspruchs 8 bis 11,
**dadurch gekennzeichnet, dass** die faserverstärkte Kautschuk- oder Pre-Preg-Struktur (3) eine polygonale Struktur aufweist.

13. Luftreifen nach einem der Ansprüche 8 bis 12,
**dadurch gekennzeichnet, dass** die faserverstärkte Kautschuk- oder Pre-Preg-Struktur (3) eine Wabenstruktur aufweist.

14. Luftreifen nach einem der Ansprüche 8 bis 13,
**dadurch gekennzeichnet, dass** die faserverstärkte Kautschuk- oder Pre-Preg-Struktur ein Fasergewebe umfasst, das aus einer Vielzahl von Schnüren besteht, die parallel zueinander sind.

15. Luftreifen nach Anspruch 14, **dadurch gekennzeichnet, dass** der faserverstärkte Kautschuk oder Pre-Preg ein Fasergewebe mit einer Netzstruktur umfasst, in der sich die Schnüre in einem rechten Winkel schneiden.

16. Luftreifen nach einem der Ansprüche 8 bis 15,
**dadurch gekennzeichnet, dass** die Faser Nylon ist.

17. Luftreifen nach einem der Ansprüche 8 bis 16,
**dadurch gekennzeichnet, dass** er eine Schaumstoffmaterialschicht (18) umfasst, die platziert ist, um eine Oberfläche der faserverstärkten Kautschuk- oder Pre-Preg-Struktur (3) abzudecken, die dem inneren Hohlraum (7) zugewandt ist.

18. Luftreifen nach Anspruch 17, **dadurch gekennzeichnet, dass** die Schaumstoffmaterialschicht (18) aus Polyurethan hergestellt ist.

19. Luftreifen nach einem der Ansprüche 8 bis 16,
**dadurch gekennzeichnet, dass** er eine Membran oder Platte umfasst, die platziert (14; 16) ist, um eine Oberfläche der faserverstärkten Kautschuk- oder Pre-Preg-Struktur (3) abzudecken, die dem inneren Hohlraum (7) zugewandt ist.

20. Luftreifen nach Anspruch 19, **dadurch gekennzeichnet, dass** die Membran oder Platte (16) perforiert ist.

21. Luftreifen nach Anspruch 19 oder 20, **dadurch gekennzeichnet, dass** Membran oder Platte (14; 16) aus expandiertem PET, PE, PP, PU, PA hergestellt ist.

22. Luftreifen nach einem der Ansprüche 8 bis 21,
**dadurch gekennzeichnet, dass** er eine Dichtmittelschicht (12) umfasst, die zwischen der Innenauskleidung (8) und der faserverstärkten Kautschuk- oder Pre-Preg-Struktur (3) platziert ist.

## Revendications

1. Procédé de fabrication d'une couche de réduction de bruit conçue pour être logée à l'intérieur de la cavité d'un pneu ; ledit procédé étant **caractérisé en ce qu'**il comprend :
- une étape d'empilement, au cours de laquelle un empilement (1) de couches de pré-imprégné ou de caoutchouc renforcé par fibres, dans laquelle entre une couche et l'autre couche est intercalée une pluralité d'éléments antiadhérents (2) espacés les uns des autres ; lesdits éléments antiadhérents étant agencés en position décalée le long des deux faces d'une même couche de pré-imprégné ou de caoutchouc renforcé par des fibres ;
- une étape de vulcanisation, au cours de laquelle ledit empilement (1) de couches de pré-imprégné ou de caoutchouc renforcé par des fibres est soumis à une pression de compactage et à une température de vulcanisation de caoutchouc renforcé par des fibres ;
lesdits éléments antiadhérents (2) étant à l'état liquide.

2. Procédé selon l'une des revendications 1, **caractérisé en ce que** les éléments antiadhérents disposés entre les couches de pré-imprégné ou de caoutchouc renforcé par des fibres sont espacés les uns des autres d'une même distance et sont décalés de la moitié de ladite distance le long de deux faces opposées d'une même couche de pré-imprégné ou de caoutchouc renforcé par des fibres.

3. Procédé selon la revendication 1 ou 2, **caractérisé en ce que** ladite structure de pré-imprégné ou de caoutchouc renforcé par des fibres comprend un tissu de fibres constitué d'une pluralité de cordons parallèles les uns aux autres.

4. Procédé selon la revendication 3, **caractérisé en ce que** le pré-imprégné ou caoutchouc renforcé par des fibres comprend un tissu de fibres avec une structure en filet.

5. Procédé selon la revendication 4, **caractérisé en ce que** ledit pré-imprégné ou caoutchouc renforcé par des fibres comprend un tissu de fibres avec une structure en filet dans laquelle les cordons se croisent à angle droit.

6. Procédé selon l'une des revendications précédentes,
**caractérisé en ce que** ladite fibre est le nylon.

7. Procédé selon l'une des revendications précédentes,
**caractérisé en ce que** ledit pré-imprégné ou caoutchouc renforcé par des fibres (3) a une structure en nid d'abeille.

8. Pneumatique (4) comprenant une bande de roulement (5), une carcasse (6) définissant une cavité interne (7) et une couche de réduction de bruit, qui est agencée dans ladite cavité interne dans la zone de la bande de roulement ; ledit pneu étant **caractérisé en ce que** la couche de réduction de bruit comprend une structure de pré-imprégné ou de caoutchouc renforcé par des fibres (3) avec des cellules traversantes ; lesdites cellules traversantes ayant une zone transversale allant de 100 à 20 000 mm² ; ladite structure de pré-imprégné ou de caoutchouc renforcé par des fibres (3) ayant une hauteur allant de 15 à 40 mm et une largeur allant de 45 à 85 % par rapport à la largeur de la bande de roulement.

9. Pneumatique selon la revendication 8, **caractérisé en ce que** lesdites cellules traversantes ont une zone transversale allant de 500 et 9 000.

10. Pneumatique selon la revendication 9, **caractérisé en ce que** lesdites cellules traversantes ont une zone transversale allant de 1 000 à 5 000 mm².

11. Pneumatique selon l'une de la revendication 8 à 10,
**caractérisé en ce que** ladite structure de pré-imprégné ou de caoutchouc renforcé par des fibres (3) a une hauteur allant de 20 à 35 mm et une largeur comprise entre 55 et 80 % d'une largeur de bande de roulement.

12. Pneumatique selon l'une de la revendication 8 à 11,
**caractérisé en ce que** ladite structure de pré-imprégné ou de caoutchouc renforcé par des fibres (3) a une structure polygonale.

13. Pneumatique selon l'une des revendications 8 à 12,
**caractérisé en ce que** ladite structure de pré-imprégné ou de caoutchouc renforcé par des fibres (3) a une structure en nid d'abeille.

14. Pneumatique selon l'une des revendications 8 à 13,
**caractérisé en ce que** ladite structure de pré-imprégné ou de caoutchouc renforcé par des fibres comprend un tissu de fibres constitué d'une pluralité de cordons parallèles les uns aux autres.

15. Pneumatique selon la revendication 14, **caractérisé en ce que** ledit pré-imprégné ou caoutchouc renforcé par des fibres comprend un tissu de fibres avec une structure en filet dans laquelle les cordons se croisent à angle droit.

16. Pneumatique selon l'une des revendications 8 à 15,
**caractérisé en ce que** ladite fibre est le nylon.

17. Pneumatique selon l'une des revendications 8 à 16,
**caractérisé en ce qu'**il comprend une couche de matériau en mousse (18) placée pour recouvrir une surface de ladite structure de pré-imprégné ou de caoutchouc renforcé par des fibres (3) faisant face à la cavité interne (7).

18. Pneumatique selon la revendication 17, **caractérisé en ce que** ladite couche de matériau en mousse (18) est faite de polyuréthane.

19. Pneumatique selon l'une des revendications 8 à 16,
**caractérisé en ce qu'**il comprend une membrane ou plaque placée (14 ; 16) pour recouvrir une surface de ladite structure de pré-imprégné ou de caoutchouc renforcé par des fibres (3) faisant face à la cavité interne (7).

20. Pneumatique selon la revendication 19, **caractérisé en ce que** ladite membrane ou plaque (16) est perforée.

21. Pneumatique selon la revendication 19 ou 20, **caractérisé en ce que** membrane ou plaque (14 ; 16) est constituée de PET, PE, PP, PU, PA, expansé.

22. Pneumatique selon l'une des revendications 8 à 21,
**caractérisé en ce qu'**il comprend une couche de scellement (12) placée entre ladite doublure interne (8) et ladite structure de pré-imprégné ou de caoutchouc renforcé par des fibres (3).
